# EUROPÄISCHE PATENTSCHRIFT

(11) **EP 4 547 466 B1**
(45) Veröffentlichungstag und Bekanntmachung des Hinweises auf die Patenterteilung: **22.07.2026**
(21) Anmeldenummer: 23736629.9
(22) Anmeldetag: 27.06.2023
(51) Int. Cl.: B29C 45/77, B29C 35/02, B29C 45/76

(54) **VERFAHREN UND VORRICHTUNG ZUR PROZESSUEBERWACHUNG WÄHREND EINER HERSTELLUNG EINES FERTIGTEILS AUS EINEM HEISSVERNETZENDEN WERKSTOFF IN EINEM URFORMVERFAHREN**
METHOD AND APPARATUS FOR PROCESS MONITORING DURING PRODUCTION OF A FINISHED PART FROM A HOT-CROSSLINKING MATERIAL IN A PRIMARY SHAPING PROCESS
PROCÉDÉ ET DISPOSITIF DE SURVEILLANCE DE PROCESSUS PENDANT LA FABRICATION D'UNE PIÈCE FINIE À PARTIR D'UN MATÉRIAU DE RÉTICULATION À CHAUD DANS UN PROCÉDÉ DE PRÉFORMAGE

(30) Priorität: 30.06.2022 DE 102022206727
(43) Veröffentlichungstag der Anmeldung: 07.05.2025
(73) Patentinhaber: Baden-Württemberg Stiftung gGmbH, 70174 Stuttgart (DE)
(72) Erfinder: MAYER, Dennis, 73728 Esslingen (DE); WEISSER, Dennis, 73728 Esslingen (DE); DECKERT, Matthias, 73728 Esslingen (DE)
(74) Vertreter: Altmann Stößel Dick Patentanwälte PartG mbB
(86) Internationale Anmeldenummer: PCT/EP2023/067425
(87) Internationale Veröffentlichungsnummer: WO 2024/003027

(56) Entgegenhaltungen:
- WO-A1-2010/005375
- DE-A1- 3 738 248
- DE-C1- 19 536 566
- DE-T2- 3 782 040

## Beschreibung

Die vorliegende Erfindung betrifft ein Verfahren und eine Vorrichtung zur Prozessüberwachung während einer Herstellung eines Fertigteils aus einem heißvernetzenden Werkstoff in einem Urformverfahren. Mittels des Verfahrens und der Vorrichtung kann eine kontinuierliche Überwachung einer Qualität des Fertigteils in einer Serienproduktion erfolgen. Die vorliegende Erfindung kann insbesondere für eine Herstellung von Bauteilen mit hohen Stückzahlen in der Flugzeug- und Fahrzeugindustrie sowie der Medizintechnik relevant sein. Auch weitere Anwendungsgebiete in der Flugzeug- und Fahrzeugindustrie, der Medizintechnik, in der Elektronikindustrie, in der Konsumgüterindustrie, in der Kosmetikindustrie sowie in der Hygieneartikelindustrie sind grundsätzlich denkbar.

### Stand der Technik

Generell ist eine Prozessüberwachung bei einem Urformverfahren von wichtiger Bedeutung, insbesondere im Rahmen einer Qualitätssicherung und -überwachung von sicherheitsrelevanten Bauteilen in der Automobil- und Luftfahrtindustrie oder in der Medizintechnik. Entsprechend gibt es hier zahlreiche Ansätze, welche sich mit dem Thema Prozessüberwachung beschäftigen.

Eine zuverlässige Möglichkeit zur Untersuchung der Vernetzungsreaktion, als wichtige Prozessgröße und Qualitätsmerkmal, ist grundsätzlich eine Durchführung einer Differentialthermoanalyse zur Messung von abgegebener oder aufgenommener Wärmemenge einer Probe bei Aufheizung, Abkühlung oder einem isothermen Prozess. Dabei wird grundsätzlich ein verkapselter Behälter, mit einer Probe mit einer Probenmenge beispielsweise im Bereich von 5 mg bis 40 mg und ein zweiter verkapselter Referenzbehälter ohne Inhalt zusammen in einer Prüfkammer einem gleichen Temperaturänderungsprogramm ausgesetzt. Dabei kommt es infolge der thermischen Eigenschaften der Probe und exothermen oder endothermen Prozessen bzw. Phasenänderungen wie Schmelzen oder Verdampfen grundsätzlich zu Temperaturdifferenzen zwischen Probe und Referenz, da bei dem untersuchten Prozess grundsätzlich thermische Energie in die oder aus der Probe fließt. Bei der Differentialthermoanalyse wird der Wärmestrom als Messgröße verwendet. Eine weitere Möglichkeit zur Prozessüberwachung von vernetzenden Stoffen bei einem Urformverfahren sind grundsätzlich indirekte Messungen mit einem Rotationsrheometer. Eine weitere Möglichkeit zur Prozessüberwachung von vernetzenden Stoffen bei einem Urformverfahren besteht grundsätzlich durch einen Einsatz einer dielektrischen Analyse (DEA).

Es sind für die beiden beschriebenen Verfahren jedoch grundsätzlich spezielle Messgeräte sowie entsprechende Software erforderlich. Die Verfahren können grundsätzlich nicht in das Fertigungsverfahren integriert werden. Die Verfahren können grundsätzlich nicht für eine Feststellung eines Vernetzungsgrads im Fertigungsverfahren eingesetzt werden und können somit auch keine nachverfolgbaren Qualitäts- und Prozessdaten liefern.

Aus dem Stand der Technik sind weiterhin verschiedene Verfahren bekannt, welche unterschiedliche Messgrößen und Parameter, wie beispielsweise Temperatur, Fließverhalten, elektrische Leitfähigkeit oder Druck zur Prozessüberwachung nutzen.

DE 10 2015 107 024 B3 beschreibt ein Verfahren zum Ermitteln einer Anzahl von Prozessparameterwerten in einem Spritzgießprozess innerhalb einer Spritzform. Dabei werden geometrische Daten der Spritzform und/oder eines Formteils ermittelt, welches in der Spritzform herzustellen ist. Unter Nutzung der geometrischen Daten wird eine virtuelle formteilspezifische Druckkurve eines Spritzgießprozesses ermittelt, auf deren Basis ein formteilspezifisches Ereignismuster ermittelt wird, welches eine Mehrzahl von singulären, mit charakteristischen Ereignisstellen der Formteilgeometrie verknüpften virtuellen Ereignissen umfasst, denen jeweils zumindest eine relative Zeitinformation sowie zumindest ein Positionsdatum zugeordnet ist, welches eine Position einer Schmelzfront des Spritzgießmaterials in der Spritzform definiert.

EP 0 897 786 A2 beschreibt ein Verfahren, welches eine Spritzgießanlage steuert. Durch die Einspritzeinheit wird Schmelze kontrolliert in eine Kavität eingebracht. Der Hohlrauminnendruck wird gemessen und überwacht. Neu ist die Untersuchung eines oder mehrerer den Verlauf dieses Druckes beeinflussender Regelparameter nach jedem Zyklus. Dazu gehören die Einspritzgeschwindigkeit, die Höhe des Nachdrucks, das Nachdruckintervall und die Formtemperatur. Eine auf diese Weise erhaltene Steuergröße bestimmt die Notwendigkeit einer Neueinstellung des relevanten Parameters. Dann wird eine geeignete Anpassung vorgenommen.

EP 0 854 778 B1 beschreibt eine Messung des Innendrucks eines Werkzeugs während eines Zyklus einer getaktet arbeitenden Maschine in Abhängigkeit von der Zeit und/oder dem zurückgelegten Förderweg. Anschließend wird der Werkzeuginnendruck in Abhängigkeit von der zurückgelegten Zeit bzw. Wegstrecke differenziert und die Auswertungsergebnisse auf Abweichungen von der monotonen Kurve überprüft. Ist dies der Fall, wird die nachfolgende Kompressionszeit bzw. der Schaltzeitpunkt so lange verändert, bis der Werkzeuginnendruckverlauf zu einem monotonen Verlauf wird.

Die Veröffentlichung P. Rosenberg et al. Investigating cavity pressure behavior in highpressure RTM process variants, 2015, AIP Conference Proceedings befasst sich mit neuen Varianten des Hochdruck-RTM-Verfahrens, nämlich Hochdruck-Injektions-RTM (HP-IRTM) und Hochdruck-Kompressions-RTM (HP-CRTM) zur Herstellung von kohlenstofffaserverstärkten Verbundwerkstoffen mit hohem Faservolumengehalt. Bei beiden Verfahren werden Hochdruck-RTM-Anlagen zur präzisen Dosierung und Mischung von hochreaktiven Epoxidharzen und Aminhärtern mit relativ hohen Durchsatzraten angewandt.

Die WO 2010/005375 A1 betrifft ein Verfahren zur Bestimmung des Aushärtungszustands eines Werkstoffs mittels Ultraschall-Laufzeitmessung. Dazu wird während eines Urformverfahrens ein Ultraschallsignal durch einen mit dem Werkstoff gefüllten Formhohlraum übertragen und dessen Laufzeit erfasst. Aus der zeitlichen Entwicklung der Laufzeit wird ein Diagramm erzeugt, das Rückschlüsse auf den Vernetzungsfortschritt bzw. die Aushärtung des Materials zulässt.

Die WO 2010/005375 A1 beschreibt weiterhin die Identifikation spezifischer Parameter dieses Diagramms, um charakteristische Merkmale des Werkstoffs, wie z. B. die maximale Vernetzungsrate oder den Zeitpunkt der vollständigen Reaktion, zu bestimmen. Zusätzlich kann ein Drucksignal aufgezeichnet werden, das zusammen mit dem Ultraschallsignal zur Temperaturbestimmung im Werkzeug herangezogen wird. Aus Druck- und Temperaturverläufen können weitere Diagramme abgeleitet werden.

Die DE 37 38 248 A1 offenbart ein Verfahren zur Regelung des Füllgrades einer Form anhand der in der Form gemessenen Druckwerte. Während der Aufheizphase zur Einleitung der Vernetzungsreaktion führt die Volumenexpansion des Formmaterials zu einem unterschiedlichen Druckanstieg. Ein ausgeprägter Druckanstieg weist auf eine vollständig gefüllte Form hin, während ein geringerer oder ausbleibender Druckanstieg auf eine Unterfüllung schließen lässt.

Die DE 37 38 248 A1 beschreibt ein Verfahren zur Regelung des Werkzeuginnendrucks, bei dem der Druckverlauf über der Zeit und/oder einem von einem Fördermittel zurückgelegten Weg erfasst und anschließend zeitlich differenziert wird. Es wird überprüft, ob sich in den abgeleiteten Kurven Unstetigkeiten oder Abweichungen von einem monotonen Verlauf ergeben. Bei Vorliegen solcher Abweichungen werden Prozessparameter wie Nachdruckzeit oder Umschaltzeitpunkt so lange angepasst, bis ein stetiger bzw. monotoner Druckverlauf erreicht ist.

Aus der DE 37 82 040 T2 ist ein Verfahren und eine Vorrichtung zur Prüfung oder Steuerung der Vernetzung elastomerer Formprodukte bekannt. Die Offenbarung ermöglicht sowohl Laboranalysen typischer Vernetzungsparameter als auch die prozessbegleitende Steuerung der Vernetzungsdauer während der Produktion.

Die DE 37 82 040 T2 beschreibt weiterhin den Einsatz eines Drucksensors, der in direktem Kontakt mit dem vernetzenden elastomeren Material steht. Die Auswertung umfasst u. a. das Feststellen eines Stadiums, in dem der Gradient der Druckabnahme einen Nullwert oder einen vorgegebenen Schwellenwert erreicht.

Die genannten Veröffentlichungen beschreiben jedoch grundsätzlich eine Analyse eines Werkzeuginnendrucks bei RTM sowie Spritzgießprozessen mit thermoplastischen und duroplastischen Kunststoffen und nicht in Bezug auf Flüssigsilikonkautschuk.

### Aufgabe der Erfindung

Die Aufgabe der vorliegenden Erfindung besteht daher darin, die aus dem Stand der Technik bekannten Nachteile und Einschränkungen zumindest teilweise zu überwinden. Insbesondere sollen ein Verfahren und eine Vorrichtung zur Prozessüberwachung während einer Herstellung eines Fertigteils aus einem heißvernetzenden Werkstoff in einem Urformverfahren vorgeschlagen werden, welche eine präzise Bauteil- und/oder Prozessüberwachung ermöglicht.

### Offenbarung der Erfindung

Diese Aufgabe wird gelöst durch Verfahren und eine Vorrichtung zur Prozessüberwachung während einer Herstellung eines Fertigteils aus einem heißvernetzenden Werkstoff mit den Merkmalen der unabhängigen Patentansprüche. Vorteilhafte Ausgestaltungen finden sich in den abhängigen Patentansprüchen.

Im Folgenden werden die Begriffe "haben", "aufweisen", "umfassen" oder "einschließen" oder beliebige grammatikalische Abweichungen davon in nicht-ausschließlicher Weise verwendet. Dementsprechend können sich diese Begriffe sowohl auf Situationen beziehen, in welchen, neben den durch diese Begriffe eingeführten Merkmalen, keine weiteren Merkmale vorhanden sind, oder auf Situationen, in welchen ein oder mehrere weitere Merkmale vorhanden sind. Beispielsweise kann sich der Ausdruck "A hat B", "A weist B auf", "A umfasst B" oder "A schließt B ein" sowohl auf die Situation beziehen, in welcher, abgesehen von B, kein weiteres Element in A vorhanden ist (d.h. auf eine Situation, in welcher A ausschließlich aus B besteht), als auch auf die Situation, in welcher, zusätzlich zu B, ein oder mehrere weitere Elemente in A vorhanden sind, beispielsweise Element C, Elemente C und D oder sogar weitere Elemente.

Weiterhin wird darauf hingewiesen, dass die Begriffe "mindestens ein" und "ein oder mehrere" sowie grammatikalische Abwandlungen dieser Begriffe, wenn diese in Zusammenhang mit einem oder mehreren Elementen oder Merkmalen verwendet werden und ausdrücken sollen, dass das Element oder Merkmal einfach oder mehrfach vorgesehen sein kann, in der Regel lediglich einmalig verwendet werden, beispielsweise bei der erstmaligen Einführung des Merkmals oder Elementes. Bei einer nachfolgenden erneuten Erwähnung des Merkmals oder Elementes wird der entsprechende Begriff "mindestens ein" oder "ein oder mehrere" in der Regel nicht mehr verwendet, ohne Einschränkung der Möglichkeit, dass das Merkmal oder Element einfach oder mehrfach vorgesehen sein kann.

Weiterhin werden im Folgenden die Begriffe "vorzugsweise", "insbesondere", "beispielsweise" oder ähnliche Begriffe in Verbindung mit optionalen Merkmalen verwendet, ohne dass alternative Ausführungsformen hierdurch beschränkt werden. So sind Merkmale, welche durch diese Begriffe eingeleitet werden, optionale Merkmale, und es ist nicht beabsichtigt, durch diese Merkmale den Schutzumfang der Ansprüche und insbesondere der unabhängigen Ansprüche einzuschränken. So kann die Erfindung, wie der Fachmann erkennen wird, auch unter Verwendung anderer Ausgestaltungen durchgeführt werden. In ähnlicher Weise werden Merkmale, welche durch "in einer Ausführungsform der Erfindung" oder durch "in einem Ausführungsbeispiel der Erfindung" eingeleitet werden, als optionale Merkmale verstanden, ohne dass hierdurch alternative Ausgestaltungen oder der Schutzumfang der unabhängigen Ansprüche eingeschränkt werden sollen. Weiterhin sollen durch diese einleitenden Ausdrücke sämtliche Möglichkeiten, die hierdurch eingeleiteten Merkmale mit anderen Merkmalen zu kombinieren, seien es optionale oder nicht-optionale Merkmale, unangetastet bleiben.

In einem ersten Aspekt betrifft die vorliegende Erfindung ein Verfahren zur Prozessüberwachung während einer Herstellung eines Fertigteils aus einem heißvernetzenden Werkstoff in einem Urformverfahren.

Unter dem Begriff des "Urformverfahrens" ist grundsätzlich ein beliebiges Fertigungsverfahren zu verstehen, bei welchem aus einem formlosen Stoff ein fester Körper hergestellt wird, der eine geometrisch definierte Form hat. Bei dem Urformverfahren kann es sich insbesondere um ein Spritzgießverfahren handeln. Dabei können Polymere in einer Form oder Kavität, welches auch als Spritzgießwerkzeug bezeichnet werden kann, unter Druck eingespritzt werden. In der Form oder Kavität kann der Werkstoff durch Abkühlung oder durch eine Vernetzungsreaktion in einen festen Zustand übergehen und kann nach einem Öffnen des Werkzeuges als Fertigteil entnommen werden. Die Kavität des Werkzeuges kann dabei im Wesentlichen eine Form und eine Oberflächenstruktur des Fertigteils bestimmen. Insbesondere kann das Werkzeug mindestens zwei aneinander fügbare Formplatten aufweisen, insbesondere mindestens eine düsenseitige Formplatte und mindestens eine schließseitige Formplatte. Die düsenseitige Formplatte kann über eine Öffnung verfügen, in welche eine Einspritzeinrichtung (Düse) eingebracht ist, welche das Einbringen der Ausgangsstoffe des heißvernetzenden Werkstoffs in die Kavität ermöglicht.

Der Begriff "Prozessüberwachung" bezeichnet grundsätzlich ein beliebiges technisches Verfahren zur Beurteilung eines Fertigungsverfahrens. Durch die Prozessüberwachung kann eine Entscheidung gefällt werden, ob in das Fertigungsverfahren eingegriffen werden soll und/oder ob das Fertigungsverfahren modifiziert werden soll.

Unter dem Begriff des "Fertigteils" wird hierbei ein zu untersuchendes dreidimensional ausgedehntes Gebilde verstanden, welches aus einem geeigneten Werkstoff in dem Urformverfahren hergestellt wird, wobei das Fertigteil eine Form aufweist, welche durch die Form einer Kavität in einem für das Urformverfahren eingerichteten Werkzeug festgelegt wird. Bei dem Fertigteil kann es sich beispielsweise um Proben oder Werkstücke für ein Labor handeln oder um Produkte oder Prototypen, etwa Teile eines Kraftfahrzeugs, deren Herstellung unter Verwendung des vorliegenden Verfahrens einem online-Monitoring unterzogen wird. Das Fertigteil kann auch als Formteil bezeichnet werden.

Das Verfahren umfasst die folgenden Schritte:
a) Bereitstellen mindestens eines für das Urformverfahren eingerichteten Werkzeugs, wobei das Werkzeug mindestens eine Kavität zur Aufnahme mindestens eines Ausgangsstoffs für den heißvernetzenden Werkstoff aufweist, und wobei in das Werkzeug ferner eine Vorrichtung zur Bestimmung eines Werkzeuginnendrucks integriert wird;
b) Erhitzen des Werkzeugs;
c) Einbringen des mindestens einen Ausgangsstoffs für den heißvernetzenden Werkstoff unter Druck in die Kavität, derart, dass das Fertigteil hergestellt wird;
d) Erfassen eines in Schritt c) auftretenden zeitlichen Verlaufs Verlaufs des Werkzeuginnendrucks;
e) Mindestens einmaliges oder mindestens zweimaliges Differenzieren des Verlaufs des Werkzeuginnendrucks zur Bestimmung mindestens einer Ableitung ausgewählt aus der Gruppe bestehend aus: der Ableitung ersten Grades; der Ableitung zweiten Grades; und
f) Charakterisierung eines Verlaufs einer chemischen Vernetzungsreaktion mittels mindestens einer Ableitung ausgewählt aus der Gruppe bestehend aus: der Ableitung ersten Grades; der Ableitung zweiten Grades.

Das Verfahren kann die Verfahrensschritte, welche im Folgenden beschrieben werden, umfassen. Die Verfahrensschritte können insbesondere in der vorgegebenen Reihenfolge durchgeführt werden. Eine andere Reihenfolge ist jedoch ebenfalls denkbar. Weiterhin können ein oder mehrere Verfahrensschritte gleichzeitig oder zeitlich überlappend durchgeführt werden. Weiterhin können einer, mehrere oder alle der Verfahrensschritte einfach oder auch wiederholt durchgeführt werden. Das Verfahren kann darüber hinaus noch weitere Verfahrensschritte umfassen.

Wie oben ausgeführt, wird in das Werkzeug die Vorrichtung zur Bestimmung des Werkzeuginnendrucks integriert. Der Begriff "integriert" bezeichnet hierbei eine Anordnung der Vorrichtung, welche fest oder, vorzugsweise, lösbar in das Werkzeug, insbesondere in die Kavität des Werkzeugs, aufnehmbar ist. Dies hat zur Folge, dass die Vorrichtung bevorzugt derart ausgestaltet ist, dass sie den Temperatur- und Druckverhältnissen, wie sie in der Kavität des Werkzeugs auftreten können, standhalten kann. Insbesondere kann die Vorrichtung derart in der Kavität des Werkzeugs angeordnet sein, dass die Vorrichtung mit einer Wand der Kavität in Berührung steht. Das Werkzeug kann insbesondere eine Einspritzvorrichtung wie beispielsweise eine Düse aufweisen. Die Vorrichtung kann in einer Nähe zu der Einspritzvorrichtung angeordnet sein. Die Vorrichtung kann auch als Werkzeuginnendrucksensor bezeichnet werden.

Mittels der Vorrichtung zur Bestimmung des Werkzeuginnendrucks kann insbesondere eine direkte Bestimmung und/oder eine indirekte Bestimmung des Werkzeuginnendrucks erfolgen. Die Vorrichtung zur Bestimmung des Werkzeuginnendrucks kann für eine direkte Bestimmung und/oder eine indirekte Bestimmung des Werkzeuginnendrucks eingerichtet sein.

Die direkte Bestimmung des Werkzeuginnendrucks kann viele Vorteile aufweisen. Insbesondere kann die direkte Bestimmung des Werkzeuginnendrucks präzise und zuverlässige Messwerte bereitstellen. Der Drucksensor kann direkt im Werkzeug platziert sein und einen tatsächlichen Druck im Inneren des Werkzeugs erfassen. Darüber hinaus kann durch eine Platzierung von Drucksensoren an verschiedenen Stellen im Werkzeug der Werkzeuginnendruck an spezifischen Positionen gemessen werden, insbesondere um lokale Unterschiede oder Probleme zu erkennen.

Die indirekte Bestimmung des Werkzeuginnendrucks kann beispielsweise mittels eines Auswerfers, beispielsweise mittels eines Auswerferstifts, erfolgen. Unter einem "Auswerfer" ist im Rahmen der vorliegenden Erfindung grundsätzlich ein Element zu verstehen, welches bei einem Urformverfahren Kraft aufwendet, um ein Fertigteil aus einer Kavität eines Werkzeugs zu stoßen. Zur indirekten Bestimmung des Werkzeuginnendrucks kann der Auswerfer ein oder mehrere Kraftsensoren umfassen. Weiterhin kann die indirekte Bestimmung des Werkzeuginnendrucks beispielsweise mittels eines Verschlusses, insbesondere mittels eines Nadelverschlusses, der Kavität erfolgen. Weiterhin kann die indirekte Bestimmung des Werkzeuginnendrucks beispielsweise mittels einer Schließkraftmessung erfolgen. Durch eine Platzierung von Drucksensoren in Schließeinheiten für das Werkzeug kann eine auf das Werkzeug ausgeübte Kraft gemessen **und auf den** Werkzeuginnendruck zurückgerechnet werden. Weiterhin kann die indirekte Bestimmung des Werkzeuginnendrucks beispielsweise mittels einer hydraulischen Druckmessung erfolgen. Der Werkzeuginnendruck korreliert grundsätzlich mit einem hydraulischen Druck der Spritzgießmaschine. Wird ein hydraulischer Drucksensor in ein hydraulisches System der Spritzgießmaschine eingebaut, kann der Werkzeuginnendruck indirekt durch die Messung des hydraulischen Drucks ermittelt werden.

Die indirekte Bestimmung des Werkzeuginnendrucks kann viele Vorteile aufweisen. Beispielsweise kann durch die indirekte Bestimmung des Werkzeuginnendrucks eine Beschädigung von Sensoren beispielsweise bei einer Verwendung von abrasiven Materialien und/oder hohen Temperaturen vermieden werden. Durch eine Vermeidung oder Reduzierung von Drucksensoren können Kosten reduziert werden. Darüber hinaus kann ein Wartungsaufwand und/oder ein Kalibrierungsaufwand reduziert werden. Weiterhin kann durch eine Vermeidung oder eine Reduzierung von Drucksensoren ein Platzbedarf reduziert werden und es können Anforderungen an eine Präzision von Konstruktion und Fertigung des Werkzeugs reduziert werden.

Die Vorrichtung zur Bestimmung des Werkzeuginnendrucks kann insbesondere ein piezoelektrischer Drucksensor sein oder umfassen. Der piezoelektrische Drucksensor kann einen Kristall aufweisen, welcher eine zu einem aufgebrachten Druck proportionale elektrische Ladung erzeugt. Die Vorrichtung zur Bestimmung des Werkzeuginnendrucks kann insbesondere ausgewählt sein aus der Gruppe bestehend aus: einem piezoelektrischen Drucksensor unter Verwendung einer direkten und/oder einer indirekten Messmethode; einem piezoresistiven Drucksensor unter Verwendung einer direkten und/oder einer indirekten Messmethode. In der Broschüre von der Kistler Group "Test & Measurement Druck, Messausrüstung für anspruchsvolle T&M Anwendungen", 960-695d-06.20 ^{©} 2018 .... 2020 Kistler Group, werden insbesondere verschiedene piezoelektrische Drucksensoren beschrieben.

Der Begriff "Werkzeuginnendruck" beschreibt grundsätzlich einen Druck, welcher in einem Werkzeug, insbesondere in einem Werkzeug mit einer Kavität, bei einem Urformverfahren entsteht. Wie oben ausgeführt, kann es sich bei dem Urformverfahren insbesondere um ein Spritzgießverfahren handeln und bei dem Werkzeuginnendruck kann es sich um einen Druck in einem Innern eines Spritzgießwerkzeugs handeln. Der Werkzeuginnendruck kann ein Indikator für eine Qualität eines Fertigteils sein. Der Werkzeuginnendruck ist grundsätzlich eine aussagekräftige Prozessgröße, die Anwendern grundsätzlich eine umfängliche Prozesstransparenz eröffnet und zu einer Null-Fehler-Produktion beitragen kann. Der Werkzeuginnendruck beschreibt grundsätzlich Vorgänge in der Kavität des Werkzeugs. Daher kann mittels des Werkzeuginnendrucks auf Entstehungsbedingungen während des Urformverfahrens geschlossen werden. Seinem Verlauf während einer Füll -, Kompressions- und/oder Nachdruckphase können grundsätzlich spezifische qualitätsrelevante Eigenschaften des Fertigteils zugeordnet werden, beispielsweise Maßtreue, Oberfläche, Gewicht oder Ausformungsgrad. Der Verlauf des Werkzeuginnendrucks stellt somit grundsätzlich einen teilespezifischen Fingerabdruck der Qualität dar, mit dem sich während des gesamten Urformverfahrens genaue Aussagen zu optimalen Prozessparametern treffen lassen. Bei dem Verlauf des Werkzeuginnendrucks kann es sich insbesondere um einen zeitlichen Verlauf des Werkzeuginnendrucks oder um einen Verlauf des Werkzeuginnendrucks in Abhängigkeit einer Temperatur handeln.

Wie oben ausgeführt, wird das Werkzeug in Schritt b) erhitzt. Das Werkzeug kann beispielsweise eine Temperatur von 100 °C bis 300 °C, vorzugsweise von 120 °C bis 250 °C und besonders bevorzugt von 140 °C bis 230 °C aufweisen. Auch andere Temperaturen sind grundsätzlich denkbar. Grundsätzlich kann die Wahl der Temperatur abhängig sein von der Art des Werkstoffs. Das Werkzeug kann mindestens eine Heizvorrichtung aufweisen, welche beispielweise ein oder mehrere Heizkreisläufe umfassen kann. Die Heizvorrichtung kann insbesondere ausgewählt sein aus der Gruppe bestehend aus: einer Ölheizung; einer Wasserheizung; einer Rahmenheizung, insbesondere einer elektrischen Rahmenheizung; einer Heizpatrone, insbesondere einer elektrischen Heizpatrone; einem Heizdraht. Auch andere Ausführungsformen sind grundsätzlich denkbar. Die Heizvorrichtung kann beispielsweise in mindestens einer der Formplatten angeordnet sein. Weiterhin kann die Heizvorrichtung in Nähe der Kavität angeordnet sein.

Wie oben ausgeführt, wird in Schritt c) der mindestens eine Ausgangsstoff für den heißvernetzenden Werkstoff unter Druck in die Kavität eingebracht, derart, dass das Fertigteil hergestellt wird. Insbesondere kann der mindestens eine Ausgangsstoff unter einem Druck von 5 bar bis 700 bar, vorzugsweise von 10 bar bis 400 bar, in die Kavität eingebracht werden. Auch andere Drücke sind grundsätzlich denkbar. Das Einbringen in die Kavität kann insbesondere mittels eines Fördergeräts, insbesondere mittels eines Extruders, erfolgen. Bei der Verarbeitung von Flüssigsilikonkautschuk kann, im Gegensatz zur Thermoplastverarbeitung, grundsätzlich auch ohne Nachdruck gearbeitet werden, da insbesondere keine Schwindung ausgeglichen werden muss. Der Ausgangsstoff wird zwar unter Druck in die Kavität eingespritzt, allerdings steigt der Druck in der Kavität grundsätzlich durch Volumendilatation an. Es wird grundsätzlich lediglich eine Nadelverschlussdüse verschlossen, sodass kein Material von der Kavität entweichen kann. Typische Vernetzungszeiten sind grundsätzlich 20 s bis 40 s. Die Vernetzungszeiten sind grundsätzlich jedoch stark von einer Bauteildicke bzw. Fertigteildicke abhängig.

Der Begriff "heißvernetzender Werkstoff" bezeichnet grundsätzlich einen beliebigen Werkstoff, bei welchem Ausgangsstoffe des Werkstoffs bei hohen Temperaturen miteinander vernetzen. Bei den hohen Temperaturen kann es sich insbesondere um Temperaturen von 100 °C bis 300 °C, vorzugsweise von 120 °C bis 250 °C und besonders bevorzugt von 140 °C bis 230 °C handeln. Insbesondere kann es sich bei dem heißvernetzenden Werkstoff um ein reaktives Material handeln, welches mit Temperaturen unterhalb der jeweiligen spezifizierten Vernetzungstemperatur des Werkstoffes in eine heiße Form eingespritzt werden kann. Flüssigsilikonkautschuk wird üblicherweise bei Raumtemperatur-ähnlichen Temperaturen (15°C - 30°C) eingespritzt. Insbesondere kann der heißvernetzende Werkstoff eine Wärmeausdehnung in der Form aufzeigen.

Der Begriff "Ausgangsstoff" bezeichnet grundsätzlich einen beliebigen Stoff, welcher eine Grundlage für ein bestimmtes Material bildet. Für die Herstellung des Materials kann der Ausgangsstoff insbesondere an einer chemischen Reaktion mit anderen Ausgangsstoffen beteiligt sein. Der Ausgangsstoff kann insbesondere ausgewählt sein aus der Gruppe bestehend aus: einem Polymer, einem Katalysator, einem Vernetzer. Auch andere Ausgangsstoffe sind grundsätzlich denkbar.

Der heißvernetzende Werkstoff kann insbesondere ausgewählt werden aus der Gruppe bestehend aus: einem Flüssigsilikonkautschuk; einem Festsilikonkautschuk; einem Epoxidharz; einem Polyurethan; einem Polyurethanschaum; einem Duroplast, insbesondere einem rieselfähigen Duroplast; einem Polyesterharz, einem Phenolharz. Vorzugsweise kann es sich bei dem heißvernetzenden Werkstoff um einen Flüssigsilikonkautschuk, insbesondere um einen schnellvernetzenden Flüssigsilikonkautschuk, handeln. Auch andere Materialien sind grundsätzlich denkbar. Insbesondere kann der heißvernetzende Werkstoff, insbesondere der Flüssigsilikonkautschuk, eine Zykluszeit von weniger als 60 s aufweisen. Auch andere Zykluszeiten sind grundsätzlich denkbar. Die Zykluszeit kann insbesondere von einer Werkzeugtemperatur und einer Gestaltung des Fertigteils abhängen. Auch andere Parameter sind denkbar. Dünnwandige Bauteile können beispielsweise eine Zykluszeit von bis zu 10 s aufweisen, während dickwandige Bauteile eine Zykluszeit von größer als 60 s aufweisen können. Zusätzliche Einflussparameter auf die Zykluszeit können sein: eine Materialzusammensetzung, ein oder mehrere Prozessparameter wie beispielsweise die Werkzeugtemperatur. Unter einer "Zykluszeit" ist im Rahmen der vorliegenden Erfindung grundsätzlich eine Zeitspanne oder Dauer für eine Herstellung eines Fertigteils aus dem heißvernetzenden Werkstoff zu verstehen.

Der Begriff "Flüssigsilikonkautschuk", englisch: "Liquid Silicone Rubber (LSR)", bezeichnet grundsätzlich ein beliebiges Material basierend auf Zwei-Komponenten-Silikonelastomeren. Bei einem Spritzgießen der Zwei-Komponenten-Silikonelastomere kommt es grundsätzlich zu einer Quervernetzung von zwei Polymeren innerhalb der Werkzeugform. Die Quervernetzung kann auch als Additionsvernetzung bezeichnet werden. Als sich quervernetzende Polymere wird beispielsweise Poly(dimethyl)siloxan (PDMS) eingesetzt, welches mithilfe des Crosslinkers H-Siloxan und eines PlatinKatalysators quervernetzt wird. Flüssigsilikonkautschuk kann grundsätzlich bei hohen Temperaturen und sehr schnellen Zykluszeiten geformt und verarbeitet werden. Durch die hohen Temperaturen des Werkzeugs kann die Vernetzungsreaktion stark beschleunigt werden, so dass innerhalb von wenigen Sekunden Fertigteile hergestellt werden können. Aus Flüssigsilikonkautschuk können Kunststoffbauteile für unterschiedliche Branchen hergestellt werden, von Dichtlippen für Frontschweinwerfer bis hin zu Kontaktlinsen.

Flüssigsilikonkautschuk kann insbesondere mit zwei Komponenten, A und B, verarbeitet werden, die im Verhältnis 1:1 gemischt werden und sich in einer platinkatalysierten Additionsreaktion dreidimensional vernetzen. Die Reaktion kann insbesondere durch Verarbeitungstemperaturen von 150 °C bis 230 °C beschleunigt werden. Bei Raumtemperatur kann eine Topfzeit mehrere Tage benötigen. Das Basispolymer kann insbesondere ein Poly(dimethyl)siloxan (PDMS) sein, das durch Substitution verschiedener funktioneller Gruppen an gewünschte Anforderungen angepasst werden kann. Die Vernetzungsreaktion der beiden Komponenten läuft grundsätzlich exotherm, irreversibel und ohne Spaltprodukte ab. Sie kann durch die Chalk-Harrod-Katalyse beschrieben werden. Die A-Komponente umfasst in der Regel einen Katalysator, insbesondere einen Platinkomplex, während die B-Komponente einen Vernetzer in Form von H-Siloxan umfasst. Im Vergleich zu den bereits gut erforschten Thermoplasten gibt es grundsätzlich wenig Prozesswissen über die Verarbeitung von Flüssigsilikonkautschuk. Obwohl die Aushärtekinetik von Flüssigsilikonkautschuk bereits eingehender untersucht wurde und Studien zur Simulation von Flüssigsilikonkautschuk durchgeführt wurden, fehlt es an der Anwendung dieser Erkenntnisse auf einen realen Spritzgießprozess. Eine Vernetzungsreaktion ohne Spaltprodukte liegt grundsätzlich bei Flüssigsilikonkautschuk vor. Es gibt jedoch auch andere Verfahren und/oder Reaktionsmechanismen, wie beispielsweise Polykondensation, bei denen Spaltprodukte während der Vernetzungsreaktion entstehen. Fertigteile oder Bauteile aus Flüssigsilikonkautschuk können optional in einem weiteren Prozessschritt getempert werden.

Der Flüssigsilikonkautschuk kann ausgewählt werden aus der Gruppe bestehend aus: einem selbstschmierenden Flüssigsilikonkautschuk; einem selbsthaftenden Flüssigsilikonkautschuk; einem optischen Flüssigsilikonkautschuk, einem medizinischen Flüssigsilikonkautschuk, einem isolierenden Flüssigsilikonkautschuk. Weiterhin kann der Flüssigsilikonkautschuk ausgewählt sein aus der Gruppe bestehend aus: einem hochreißfesten Flüssigsilikonkautschuk; einem Flüssigsilikonkautschuk ohne Nachhärtung; einem hitzestabilen Flüssigsilikonkautschuk, einem kühlbeständigen Flüssigsilikonkautschuk; einem flammhemmenden Flüssigsilikonkautschuk; einem Flüssigsilikonkautschuk mit niedriger Viskosität. Auch andere Arten von Flüssigsilikonkautschuk sind grundsätzlich denkbar.

Spritzgießprozesse von Thermoplasten und Flüssigsilikonkautschuken unterscheiden sich grundsätzlich in wesentlichen Punkten, wie chemischen Eigenschaften, Prozessführung und -parametern. Beim Spritzgießverfahren mit Flüssigsilikonkautschuken kommt es grundsätzlich zu einer chemischen Quervernetzung von verschiedenen Polymeren, wodurch die feste Form entsteht. Thermoplaste hingegen erstarren grundsätzlich. Die Ausgangsstoffe des Flüssigsilikonkautschuks werden vor dem Einspritzen in die Kavität des Werkzeugs grundsätzlich nicht erhitzt und daher kalt eingespritzt, während Thermoplaste bei höheren Temperaturen grundsätzlich aufgeschmolzen werden, um fließfähig zu sein. Außerdem sind in einem Spritzgießprozess von Flüssigsilikonkautschuk auftretende Werkzeuginnendrücke sowie Zykluszeiten grundsätzlich länger als bei Thermoplasten. Ein wesentlicher Unterschied liegt grundsätzlich in den Druckverläufen des Werkzeuginnendrucks, welche bei Flüssigsilikonkautschuken und Thermoplasten sehr unterschiedlich verlaufen können. Dies äußert sich vor allem darin, dass bei Flüssigsilikonkautschuken der Werkzeuginnendruck während des Spritzgießprozesses grundsätzlich durch die Wärmeausdehnung des anfangs kalten Ausgangsstoffs im heißen Werkzeug zunimmt, während bei Thermoplasten der Werkzeuginnendruck nach Abschluss des Einspritzvorgangs in der Nachdruckphase wieder abnehmen kann. Der Druckverlauf bei einer Verarbeitung von Flüssigsilikonkautschuken verläuft grundsätzlich aufgrund einer umgekehrten Temperaturführung (kalte Ausgangsstoffe werden in das heiße Werkzeug eingespritzt) völlig anders. Dies führt grundsätzlich zu einer thermischen Ausdehnung des Bauteils im Werkzeug durch den konstanten Temperatureintrag, sobald sich die Ausgangsstoffe im heißen Werkzeug befinden. Mit fortschreitender Prozesszeit steigt daher der Werkzeuginnendruck stetig an, bis das Fertigteil ausgestoßen wird.

Wie oben ausgeführt, wird in Schritt d) der zeitliche Verlauf Verlauf des Werkzeuginnendrucks in Schritt c) erfasst. Der Verlauf des Werkzeuginnendrucks kann somit während des Urformverfahrens selbst, insbesondere während der Herstellung des Fertigteils, verfolgt werden, insbesondere um auf diese Weise den Verlauf der chemischen Vernetzungsreaktion zu verfolgen.

Der Begriff der "Vernetzungsreaktion" bezeichnet hierbei eine chemische Reaktion, bei welcher eine Verknüpfung einer Vielzahl von Makromolekülen zu einem dreidimensionalen Netzwerk erfolgt, wobei die Verknüpfung insbesondere an bereits bestehenden Makromolekülen einsetzen kann. Die Vernetzungsreaktion findet unter Wahl bestimmter Parameter, insbesondere von Druck und Temperatur statt, wobei die Verknüpfung der Makromoleküle mit fortschreitender Vernetzungsreaktion in der Regel stetig zunimmt. In Folge der Vernetzungsreaktion ergibt sich eine Veränderung der chemischen, physikalischen und/oder mechanischen Eigenschaften des Materials, welche auch als "Werkstoffparameter" bezeichnet werden. Als Maß für die Veränderung des Materials während der Herstellung des Fertigteils wird im Allgemeinen ein Wert für einen Vernetzungsgrad angegeben, wobei der "Vernetzungsgrad" durch einen Anteil an vernetzten Stellen in Bezug auf eine Gesamtmenge des Kunststoffs definiert ist.

Ein Abfallen des Verlaufs des Werkzeuginnendrucks ist grundsätzlich ein charakteristisches Merkmal, welches zeigt, dass die Vernetzungsreaktion, insbesondere zwischen den beiden Polymeren des Flüssigsilikonkautschuks, abgeschlossen ist. Die Vernetzungsreaktion findet grundsätzlich schlagartig statt und ist schnell abgeschlossen. Wird während der Werkzeuginnendruckmessung ein Peak im Verlauf des Werkzeuginnendrucks registriert, kann nach kurzer Wartezeit davon ausgegangen werden, dass die Vernetzungsreaktion abgeschlossen ist. Grundsätzlich zeigen unterschiedliche Materialien unterschiedliche Druck- und Temperaturverläufe und weisen daher andere Zykluszeiten auf.

In Schritt e) wird, wie oben ausgeführt, der Verlauf des Werkzeuginnendrucks zur Bestimmung der Ableitung ersten und/oder zweiten Grades mindestens einmalig oder mindestens zweimalig differenziert. Der Begriff "Ableitung" bezeichnet grundsätzlich einen Grenzwert des Differenzenquotienten einer Funktion. Das bedeutet, dass man sich für jeden x-Wert einer Funktion anschaut, ob der y-Wert des vorherigen und des folgenden x-Werts größer, kleiner oder gleich des y-Wertes des untersuchten x-Wertes ist. Eine Ableitungsfunktion beschreibt eine Funktion, die das Steigungsverhalten der untersuchten Funktion in jedem Punkt beschreibt. Für die Funktion f(x) lautet die Ableitungsfunktion f'(x). Die Ableitungsfunktion f'(x) wird als erste Ableitung oder Ableitung ersten Grades bezeichnet. Für die Ableitung der ersten Ableitung lautet die Ableitungsfunktion f" (x). Die Ableitungsfunktion f" (x) wird als zweite Ableitung oder als Ableitung zweiten Grades bezeichnet.

Wie oben ausgeführt, wird in Schritt f) der Verlauf der chemischen Vernetzungsreaktion mittels der Ableitung ersten Grades und/oder zweiten Grades charakterisiert. In Schritt f) kann die Charakterisierung des Verlaufs der chemischen Vernetzungsreaktion insbesondere durch Ermitteln mindestens einer der folgenden spezifischen Größen bestimmt werden:
- einem Nulldurchgang der Ableitung zweiten Grades;
- einem Verlauf der Ableitung zweiten Grades;
- einem Extremwert der Ableitung zweiten Grades.

Weiterhin kann in Schritt f) die Charakterisierung des Verlaufs der chemischen Vernetzungsreaktion insbesondere durch Ermitteln mindestens einer der folgenden spezifischen Größen bestimmt werden:
- einem Nulldurchgang der Ableitung ersten Grades;
- einem Verlauf der Ableitung ersten Grades;
- einem Extremwert der Ableitung ersten Grades.

Insbesondere kann der zeitliche Verlauf des Werkzeuginnendrucks, mindestens eine erste Phase, mindestens eine zweite Phase und mindestens eine dritte Phase aufweisen. Die zweite Phase kann sich der ersten Phase anschließen. Die dritte Phase kann sich der zweiten Phase anschließen. Die erste Phase, die zweite Phase und die dritte Phase können unterschiedliche durchschnittliche Druckanstiege aufweisen. Die erste Phase kann als Aufheizphase oder als Erwärmungsphase bezeichnet werden. In der ersten Phase kann sich der Ausgangsstoff für den heißvernetzenden Werkstoff erwärmen und sich dadurch ausdehnen. Die zweite Phase kann als Vernetzungsphase bezeichnet werden. In der zweiten Phase kann sich der Ausgangsstoff für den heißvernetzenden Werkstoff vernetzen, derart, dass der heißvernetzende Werkstoff entsteht. Bei der Vernetzungsreaktion kann es sich um eine exotherme Vernetzungsreaktion handeln. Dabei kann eine Ausdehnung des heißvernetzenden Werkstoffs stattfinden. Darüber hinaus kann in der zweiten Phase eine Schrumpfung aufgrund einer Dichteänderung stattfinden. In der dritten Phase kann der heißvernetzende Werkstoff auf eine eingestellte Formtemperatur erwärmt werden und kann sich dadurch ausdehnen. Der Verlauf des Werkzeuginnendrucks jeweils in der ersten Phase, in der zweiten Phase und in der dritten Phase kann insbesondere von einen oder mehreren der folgenden Parameter abhängen: Maschinenparameter, Material, Fertigteilgeometrie, Werkzeugaufbau. Auch ein Einfluss von weiteren Parametern ist möglich.

Insbesondere kann in Schritt f) der Verlauf der chemischen Vernetzungsreaktion durch eine Betrachtung und/oder Auswertung der Ableitung ersten Grades und/oder der Ableitung zweiten Grades während der ersten Phase, insbesondere der Aufheizphase, und/oder während der zweiten Phase, insbesondere der Vernetzungsphase, charakterisiert werden. Somit kann mittels des erfindungsgemäßen Verfahrens grundsätzlich die Vernetzung des heißvernetzenden Werkstoffs in einer Phase detektiert werden, in welcher ein In der ersten Phase und in der zweiten Phase liegen grundsätzlich lediglich kleine Abweichungen in dem Verlauf des Werkzeuginnendrucks vor. Mittels der Ableitung ersten Grades und/oder mittels der Ableitung zweiten Grades können diese Abweichungen grundsätzlich zuverlässig und automatisiert erkannt werden. Es muss somit grundsätzlich nicht gewartet werden, bis das Fertigteil, insbesondere das komplette Fertigteil, eine Werkzeugtemperatur angenommen hat und eine Wärmeausdehnung des Fertigteils gegen Null geht. Dann steigt der Werkzeuginnendruck grundsätzlich nicht mehr an.

Insbesondere kann mittels Schritt f) ein Abschließen der chemischen Vernetzungsreaktion bestimmt werden. Insbesondere kann, falls mittels Schritt f) das Abschließen der chemischen Vernetzungsreaktion bestimmt wird, der Schritt c) beendet werden. Weiterhin kann durch Schritt f) eine Zykluszeit der Herstellung des Fertigteils aus Flüssigsilikonkautschuk in dem Urformverfahren optimiert werden.

Diese Art der Auswertung kann grundsätzlich Rückschlüsse auf Materialveränderungen während der Vernetzungsreaktion zulassen. Auf diese Weise kann die Zykluszeit der Urformverfahren messtechnisch analysiert und optimiert werden.

Zur Durchführung des erfindungsgemäßen Verfahrens kann bevorzugt eine elektronische Einrichtung, insbesondere ein Computer, vorgesehen sein, welcher einen Programmcode, der zur Durchführung des vorliegenden Verfahrens eingerichtet ist, aufweist.

Ein Computerprogramm kann dazu eingerichtet sein, die beschriebenen Schritte des Verfahrens, insbesondere die Schritte b) bis f), und, gegebenenfalls, weitere Schritte durchzuführen. Für Einzelheiten hierzu wird auf die Beschreibung des erfindungsgemäßen Verfahrens verwiesen.

In einem weiteren Aspekt der vorliegenden Erfindung wird eine Vorrichtung zur Prozessüberwachung während einer Herstellung eines Fertigteils aus einem heißvernetzenden Werkstoff in einem Urformverfahren vorgeschlagen. Die Vorrichtung umfasst mindestens ein für eine Ausführung des Urformverfahrens eingerichtetes Werkzeug. Das Werkzeug weist mindestens eine Kavität zur Aufnahme mindestens eines Ausgangsstoffs für den heißvernetzenden Werkstoff auf und das Werkzeug verfügt ferner über eine Vorrichtung zur Bestimmung eines Werkzeuginnendrucks. Die Vorrichtung weist weiterhin mindestens eine Steuerung auf. Die Steuerung ist eingerichtet, um mindestens die Schritte b) bis f) des Verfahrens wie es bereits beschrieben wurde oder im Folgenden noch beschrieben wird durchzuführen.

Für weitere Einzelheiten in Bezug auf die erfindungsgemäße Vorrichtung wird auf die Beschreibung des erfindungsgemäßen Verfahrens verwiesen.

### Vorteile der Erfindung

Das vorliegende Verfahren und die zugehörige Vorrichtung ermöglichen eine kontinuierliche Überwachung einer Fertigteilqualität in einer Serienproduktion mit dem Ziel einer Null-Fehler-Produktion mit einhundertprozentiger Qualität. Das Sichtbarmachen der Vernetzung von Ausgangstoffen des heißvernetzenden Werkstoffs während des Spritzgießprozesses ermöglicht eine präzise Bauteil- und Prozessüberwachung. Zusätzlich kann so die Zykluszeit von Fertigteilen exakt bestimmt und ein Verlauf der Vernetzungsreaktion verfolgt werden. Insbesondere kann eine Vernetzung aus einer gemessenen Werkzeuginnendruckkurve bestimmt und/oder abgelesen werden.

Es kann der Werkzeuginnendruck speziell ausgewertet werden, der zum Teil standardmäßig zur Prozessüberwachung gemessen wird. Dabei kann die Werkzeuginnendruckkurve zweimal abgeleitet werden und der größte Ausschlag, der im zu erwartenden Bereich liegt, kann als der Punkt bestimmt werden, bei dem die Vernetzung abgeschlossen ist. Dies funktioniert grundsätzlich sowohl im Spritzgießwerkzeug für Serienprozesse als auch in einem kleineren Messaufbau. Es kann eine Information über die Vernetzung für jedes hergestellte Bauteil erhalten werden und gegebenenfalls dokumentiert, insbesondere zum Zwecke der Qualitätssicherung oder der Nachverfolgbarkeit, werden.

Es kann eine Bestimmung der optimalen Zykluszeit abhängig von eingestellter Werkzeugtemperatur und eine Nachverfolgbarkeit der Vernetzungsreaktion live während der Herstellung erfolgen. Es kann die Zykluszeit optimiert werden. Dadurch kann eine Kosteneinsparung und effizientere Ausnutzung von Ressourcen erfolgen. Neben der Qualitätssicherung kann die Analyse des Werkzeuginnendrucks aber auch genutzt werden zum Einstellen und Optimieren der Zykluszeiten beim Aufsetzen neuer Produktionsprozesse.

Bei der vorliegenden Erfindung kann dahingegen der zeitliche Verlauf des Werkzeuginnendrucks genutzt werden, um die chemische Vernetzungsreaktion an sich zu verfolgen. Insbesondere kann nach einem charakteristischen Segment und/oder nach einem charakteristischen Bereich im Verlauf des Werkzeuginnendrucks gesucht werden.

Insbesondere kann nach Unstetigkeiten wie Wendepunkte, Abfall, Anstieg und/oder Gradientenverlauf, während der Aufheizphase gesucht werden.

Es muss nicht gewartet werden, bis der Werkstoff vollständig erwärmt und damit expandiert ist.

### Kurze Beschreibung der Figuren

Bevorzugte Ausführungsbeispiele der vorliegenden Erfindung sind in den Figuren dargestellt und werden in der nachfolgenden Beschreibung ohne Beschränkung der Allgemeinheit näher erläutert. Hierbei zeigen:
- Figur 1: eine schematische Darstellung eines bevorzugten Ausführungsbeispiels für eine erfindungsgemäße Vorrichtung zur Prozessüberwachung während einer Herstellung eines Fertigteils aus Flüssigsilikonkautschuk in einem Urformverfahren;
- Figuren 2A und 2B: einen schematischen Verlauf eines Drucksignals über die Temperatur in einer Kavität, unterteilt in drei Phasen (Figur 2A) und schematische Darstellung der zweiten Ableitung des Drucksignals mit charakteristischem Kurvenverlauf, der die Vernetzung des Flüssigsilikonkautschuks markiert (Figur 2B);
- Figuren 3A und 3B: eine CAD-Schnittdarstellung einer Prüfkammer (Figur 3A) und ein verwendetes Bauteil zur Druckmessung während des Spritzgießprozesses (Figur 3B);
- Figur 4: Ergebnisse von DSC-Messungen für Silopren 2050, insbesondere eine temperaturabhängige Darstellung der Vernetzung für verschiedene Heizraten;
- Figuren 5A bis 5C: eine Messung von Druck und Temperatur von Silopren 2050 über die gemessene Zeit beim Aufheizen von 25 °C auf 150 °C mit einer Heizrate von 2,9 K min⁻¹, Halten bei 150 °C und Abkühlen auf 25 °C (Figur 5A); einen Druck von Silopren 2050 aufgetragen gegen die Temperatur bei Erwärmung und Abkühlung (Figur 5B) und eine geglättete Druckkurve mit erster und zweiter Ableitung für Silopren 2050 und Silastic MS-1002 (Figur 5C); und
- Figur 6: geglättete Druckkurven von Silopren 2050 im Spritzgießwerkzeug bei 150 °C und 180 °C Werkzeugtemperatur.

### Ausführungsformen der Erfindung

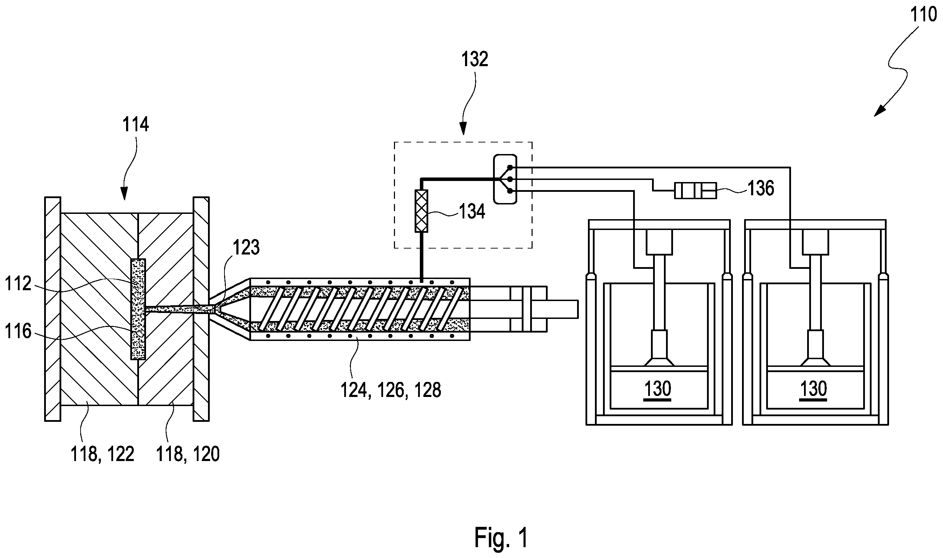

Figur 1 zeigt eine schematische Darstellung eines bevorzugten Ausführungsbeispiels für eine erfindungsgemäße Vorrichtung 110 zur Prozessüberwachung während einer Herstellung eines Fertigteils 112 aus Flüssigsilikonkautschuk in einem Urformverfahren.

In Figur 1 ist ein Werkzeug 114 der Vorrichtung 110 dargestellt. Das Werkzeug 114 weist eine Kavität 116 auf, wobei die Kavität 116 in Figur 1 beispielhaft als Hohlraum zwischen zwei aneinander gefügten Formplatten 118, welche üblicherweise als düsenseitige Formplatte 120 und als schließseitige Formplatte 122 bezeichnet werden, ausgebildet ist. Die düsenseitige Formplatte 120 verfügt hierbei über eine Öffnung 123, in welche eine Einspritzeinrichtung 124 eingebracht ist, welche das Einbringen von Komponenten 130 des Flüssigsilikonkautschuks, in die Kavität 116 ermöglicht. Die Einspritzeinrichtung 124 kann insbesondere eine Fördereinheit 126, insbesondere einen Extruder 128, aufweisen. Das Werkzeug 114 kann insbesondere eine Heizeinrichtung sowie eine Vorrichtung zur Bestimmung eines Werkzeuginnendrucks aufweisen. Diese sind in Figur 1 nicht dargestellt.

Die Komponenten 130 können insbesondere mittels einer Mischvorrichtung 132 der Vorrichtung 110, welche insbesondere einen statischen Mischer 134 umfassen kann, gemischt werden. Weiterhin kann die Vorrichtung 110 eine Dosiervorrichtung 136 für Tinte oder Additive aufweisen, welche mit der Mischvorrichtung 132 verbunden ist.

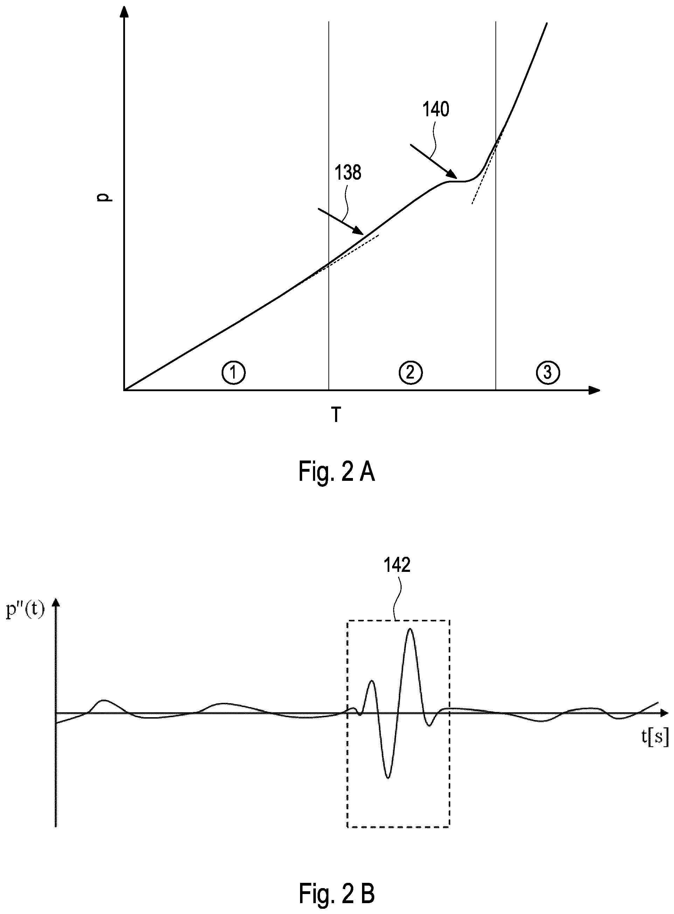

Figur 2A zeigt einen schematischen Verlauf eines Drucksignals p über die Temperatur T in einer Kavität, unterteilt in drei Phasen 1, 2 und 3.

Zwischen den Werkzeuginnendruckkurven von Bauteilen aus Thermoplasten und Bauteilen aus Flüssigsilikonkautschuk gibt es grundsätzlich gravierende Unterschiede: Anders als bei Produkten aus Thermoplasten wird die Schwindung beim Spritzgießen durch die thermische Ausdehnung des Flüssigsilikonkautschuk im heißen Werkzeug überlagert. Daher sehen die Werkzeuginnendruckkurven grundsätzlich anders aus als bei der Verarbeitung von Thermoplasten. Durch das Aufheizen der kalten Flüssigsilikonkautschuk -Masse auf Werkzeugtemperaturen von bis zu 220 °C steigt der Druck im Werkzeug grundsätzlich kontinuierlich an. Abhängig von einer Werkzeuggeometrie, einer Position des Drucksensors und einer Bauteildicke lassen sich verschiedene Phasen im Druckverlauf erkennen. Diese Phasen lassen sich grundsätzlich durch folgende drei Materialstufen beschreiben, die in Figur 2A schematisch dargestellt sind:
- Phase 1: Flüssiges Material wird erwärmt und dehnt sich dadurch aus.
- Phase 2: Vernetzungsphase: Das Material schrumpft aufgrund der Dichteänderung, während durch die exotherme Vernetzungsreaktion zusätzliche Wärme zugeführt wird. Die Erwärmung wird fortgesetzt und der Flüssigsilikonkautschuk dehnt sich aus. Es ist eine Überlappung der Effekte zu beobachten. An der mit Pfeil 138 markierten Stelle ist erkennbar, dass zusätzliche exotherme Vernetzungsenergie zu mehr Expansion führt.
- Phase 3: Das feste Material wird auf die eingestellte Formtemperatur erwärmt und dehnt sich dadurch aus. An der mit Pfeil 140 markierten Stelle ist erkennbar, dass eine Dichteabnahme während der Aushärtung zu stagnierendem Druck führt.

Figur 2B zeigt eine schematische Darstellung der zweiten Ableitung p" (t) des Drucksignals mit charakteristischem Kurvenverlauf, der die Vernetzung des Flüssigsilikonkautschuks markiert.

Nach der oben beschriebenen Theorie ist die Vernetzung innerhalb der Phase 2 der Druckkurve während des Spritzgießprozesses sichtbar. Durch zweimaliges Differenzieren des gemessenen Werkzeuginnendruckverlaufs lässt sich ein charakteristischer Punkt durch einen Nullpunkt in der zweiten Ableitung, begleitet von größeren Auslenkungen sowohl nach oben als auch nach unten, bestimmen, wie aus Figur 2B ersichtlich, siehe Kasten 142. Um diesen Punkt herum weist die Werkzeuginnendruckkurve zunächst eine deutlich größere Steigung auf, dann nimmt die Steigung schlagartig ab und geht kurz darauf wieder in eine kontinuierliche Steigung über.

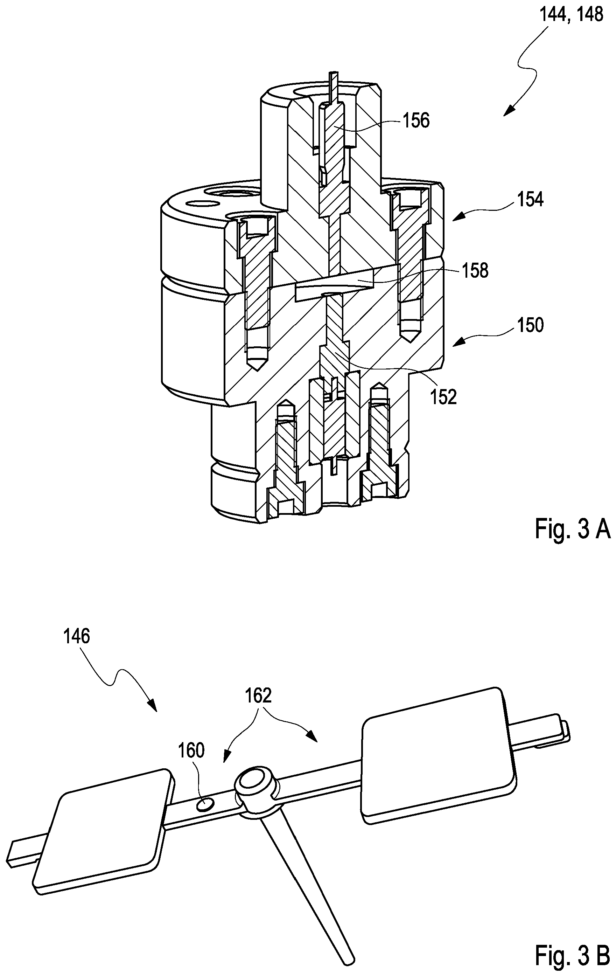

Die folgenden Figuren 3A bis 6 beziehen sich auf durchgeführte Experimente. Es wurde ein kommerzielles Zweikomponenten-Flüssigsilikonkautschuk-Material von Momentive (Silopren^{™} LSR 2050) mit einer Härte von 50 Shore A verwendet. Die Komponenten A und B wurden in einem Verhältnis von 1:1 gemischt. Um die Allgemeingültigkeit der Ergebnisse zu belegen, wurde auch eine optische Flüssigsilikonkautschuk-Formulierung Silastic^{™} MS-1002 mit einer Härte von 72 Shore A von Dow untersucht. Die beiden Komponenten wurden ebenfalls im Verhältnis 1:1 gemischt.

Die Dynamische Differenzkalorimetrie (englisch: Differential Scanning Calometry, DSC) ist Stand der Technik, um die Vernetzungsreaktion von reaktiven Materialien wie Flüssigsilikonkautschuk zu bestimmen. DSC-Messungen werden im Folgenden als Referenzmethode verwendet. Die DSC-Messungen wurden mit einem dynamischen Differenzkalorimetrie-Analysator DSC 214 Polyma der Firma NETZSCH Gerätebau GmbH durchgeführt. Probenmassen von 10 mg wurden bei vier Heizraten (1 K min⁻¹, 2,9 K min⁻¹, 5 K min⁻¹ und 10 K min⁻¹) in einfach durchbohrten und geschweißten Aluminiumtiegeln untersucht. Für dynamische Messungen wurden die Probentiegel und ein leerer, einfach durchbohrter Aluminiumtiegel als Referenz verwendet. Das Temperaturprofil umfasst ein anfängliches Aufheizen von -70 °C auf 220 °C, eine Abkühlung und anschließende Haltezeit von 15 Minuten bei -70 °C sowie ein zweites Aufheizen auf 220 °C. Die zweite Erwärmung grundsätzlich stellt sicher, dass das Flüssigsilikonkautschuk bereits nach der ersten Erwärmung vollständig vernetzt ist. Während der Messung erfolgte eine Spülung mit Stickstoff. Jede Messreihe wurde mindestens zweimal durchgeführt. Das untersuchte Probenmaterial wurde direkt aus der Spritzgießplastifiziereinheit entnommen. Bei der Probenvorbereitung wurde bei allen Messungen ein Zeitraum von 20 Minuten zwischen der Entnahme des Materials und dem Beginn der Messung eingehalten. Für die Auswertung der DSC-Messungen wurden nur die beiden Heizkurven verwendet. Die erste Heizkurve zeigt die Vernetzungsreaktion durch einen exothermen Ausschlag, während die zweite Heizkurve zu diesem Zeitpunkt unverändert bleibt, da das Material bereits vollständig und irreversibel vernetzt ist.

Figur 3A zeigt eine CAD-Schnittdarstellung einer Prüfkammer 144 und Figur 3B zeigt ein verwendetes Bauteil 146 zur Druckmessung während des Spritzgießprozesses.

Zur Ermittlung des Druckverhaltens von Flüssigsilikonkautschuk bei konstanter Volumen- und Temperaturänderung wurde eine Prüfvorrichtung 148 entwickelt. Wie in Figur 3A zu sehen ist, umfasst die Prüfvorrichtung 148 ein Unterteil 150 mit einem mittig angeordneten Spritzgießdrucksensor 152, Kistler Typ 6157C, und ein Oberteil 154 mit einem mittig angeordneten Temperatursensor 156, Kistler Typ 6193A. Die Prüfvorrichtung 148 umfasst weiterhin einen Probenraum 158. Der Probenraum 158 hat einen Durchmesser von 19,89 mm, eine Höhe von 3,01 mm und weist damit ein Volumen von 935,25 mm³ auf. Für die Messungen wurden 1,04 g Flüssigsilikonkautschuk in den unteren Teil des Probenraums 158 gegeben, der obere Teil wurde aufgesetzt und mit vier Schrauben mit einem Drehmoment von je 10 Nm befestigt. Voruntersuchungen haben gezeigt, dass dies das optimale Anzugsdrehmoment ist. Ist das Anzugsdrehmoment zu gering, öffnet sich die Prüfkammer 144 grundsätzlich während der thermischen Ausdehnung des Flüssigsilikonkautschuk und der Druck fällt schlagartig ab. Ist das Anzugsdrehmoment zu hoch, wird das flüssige Flüssigsilikonkautschuk vorgespannt und der Druck in der Prüfkammer 144 ist bereits zu Beginn der Messung hoch.

Die Prüfvorrichtung 148 wurde in einer auf 25 °C temperierten Klimakammer (espec SH-241) aufgestellt (nicht darstellt in Figur 3A). Sensorkabel wurden in einem speziellen Kabelkanal verlegt. Außerdem wurde in der Klimakammer ein Temperatursensor vom Typ K zur Aufzeichnung einer Kammertemperatur installiert. Die beiden Temperatursensoren und der Drucksensor wurden mit dem Prozessüberwachungsgerät Kistler ComoNeo Typ 5887A verbunden. Die Messdaten in der Klimakammer sowie in der Prüfvorrichtung 148 wurden kontinuierlich aufgezeichnet, während sich die Klimakammer mit einer Heizrate von 2,9 K min⁻¹ von 25 °C auf 150 °C aufheizte, diese Temperatur eine Stunde lang hielt und dann wieder auf 25 °C abkühlte.

Um die Gültigkeit des untersuchten Effekts im realen Spritzgießprozess zu belegen, wurden Flüssigsilikonkautschuk-Bauteile mit unterschiedlichen Einstellparametern hergestellt. Zu diesem Zweck wurde das in Figur 3B gezeigte Bauteil 146 aus dem gleichen Material, Silopren LSR 2050, hergestellt. Ein Werkzeuginnendrucksensor 160, Kistler 6152B, befindet sich im Bereich eines Angusses 162. Der Anguss 162 hat an dieser Stelle eine Dicke von 2,5 mm. Drucksignale wurden mit einem Prozessüberwachungsgerät ComoNeo Typ 5887A ausgewertet.

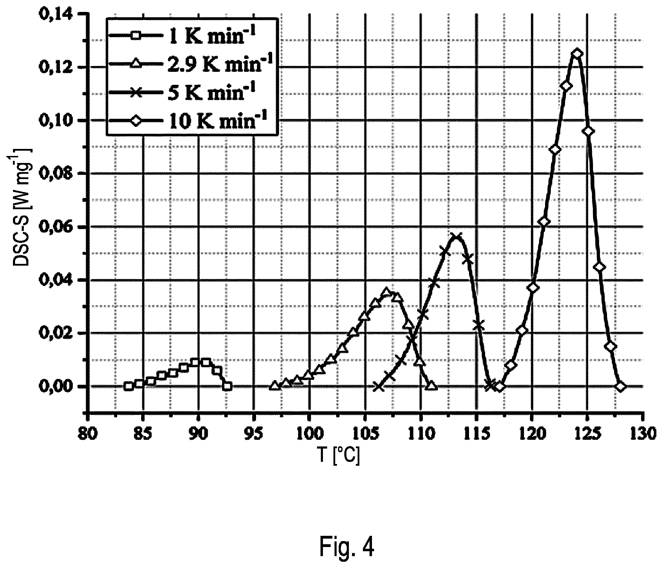

Figur 4 zeigt Ergebnisse von DSC-Messungen für Silopren 2050, insbesondere eine temperaturabhängige Darstellung der Vernetzung für verschiedene Heizraten. Es ist das DSC-Signal DSC-S in Wmg⁻¹ in Abhängigkeit der Temperatur T in °C dargestellt. Es wurden unterschiedliche Heizraten verwendet. Die mit Quadraten markierte Kurve zeigt einen Verlauf bei einer Heizrate von 1 K min⁻¹. Die mit Dreiecken markierte Kurve zeigt einen Verlauf bei einer Heizrate von 2.9 K min⁻¹. Die mit Kreuzen markierte Kurve zeigt einen Verlauf bei einer Heizrate von 1 K min⁻¹. Die mit Rauten markierte Kurve zeigt einen Verlauf bei einer Heizrate von 1 K min⁻¹.

Bei den durchgeführten DSC-Messungen kann grundsätzlich die Vernetzungsreaktion bei verschiedenen Heizraten dargestellt werden, wie aus Figur 4 ersichtlich. So beginnt bei einer Heizrate von 2,9 K min⁻¹ (Kurve mit Dreiecken) eine exotherme Vernetzungsreaktion bei 97 °C, erreicht bei 107 °C ein Umsatzmaximum und ist bei 112 °C abgeschlossen. Das gleiche Ergebnis soll mit der neuen Messmethode über die Druckkurve bei konstanter Heizrate gezeigt werden.

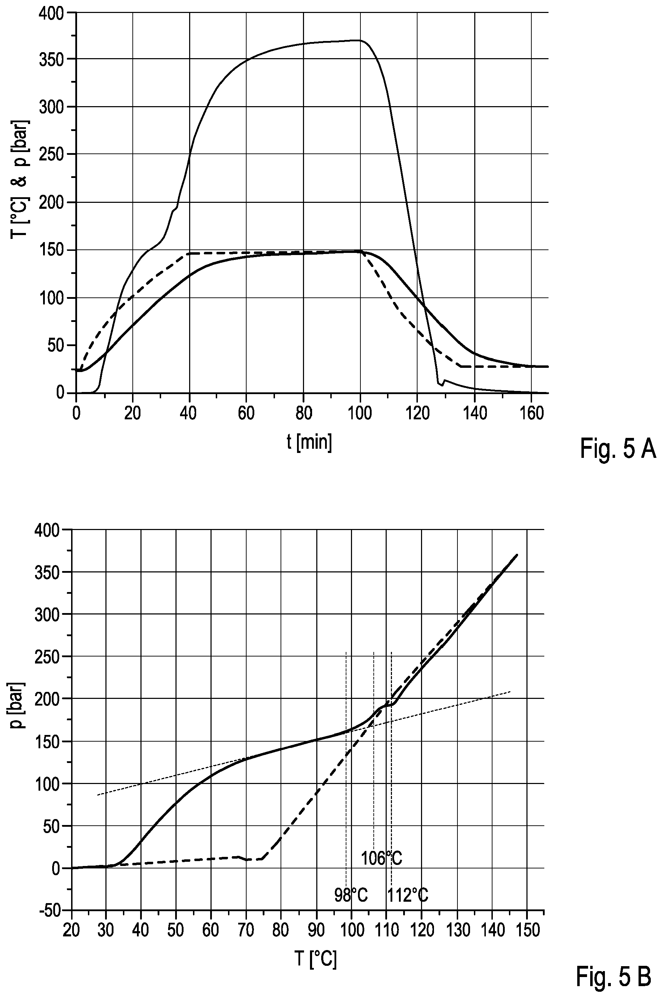

Figur 5A zeigt eine Messung von Druck und Temperatur von Silopren 2050 über die gemessene Zeit beim Aufheizen von 25 °C auf 150 °C mit einer Heizrate von 2,9 K min⁻¹, Halten bei 150 °C und Abkühlen auf 25 °C. Dargestellt sind die Temperatur T in der Klimakammer (gestrichelte Linie), die TemperaturT in der Prüfkammer 144 (fette Linie) und der Druck p in der Prüfkammer 144, jeweils in Abhängigkeit von der Messzeit t.

Zunächst wird der Ofen mit 2,9 K min⁻¹ auf 150 °C aufgeheizt. Diese Temperatur wird eine Stunde lang beibehalten, damit die Ofentemperatur die Probenkammer erreichen kann. Während dieser Zeit steigt der Druck im Probenraum auf bis zu 370 bar an. Der Ofen wird dann auf 25 °C abgekühlt. Der Druck fällt aufgrund der oben beschriebenen Schrumpfung rasch auf 0 bar ab.

Figur 5B zeigt einen Druck p von Silopren 2050 aufgetragen gegen die Temperatur T bei Erwärmung und Abkühlung. Angegeben sind die markanten Punkte der DSC-Messung mit Vernetzungsbeginn (98 °C), maximaler Umsetzung (106 °C) und Vernetzungsende (112 °C).

Figur 5B zeigt die in Figur 5A dargestellte Messreihe als Aufzeichnung des Druckverlaufs gegen die Kammertemperatur. Deutlich sichtbar sind die unterschiedlichen Verläufe der Aufheiz- und Abkühlkurven. Während zu Beginn des Aufheizvorgangs noch Effekte auftreten, die mit der Befüllung der Prüfvorrichtung 148 zusammenhängen und grundsätzlich nicht von Interesse sind, wird ab 70 °C ein kontinuierlicher Druckanstieg erreicht. In Figur 5B sind die markanten Punkte der Aufheizkurve durch Verlängerung der linearen Bereiche hervorgehoben. Wie aus Figur 5B ersichtlich ist, beginnt der Druckverlauf bei 98 °C anzusteigen und erreicht bei 106 °C sein Maximum. Ab 112 °C steigt die Druckkurve wieder zu einer kontinuierlichen Kurve an, die linear bis zu einem Druck von 370 bar bis zur Maximaltemperatur ansteigt. Die markanten Punkte entsprechen den bei der DSC-Messung ermittelten erwarteten Temperaturen. Es handelt sich dabei um den Start- und Endzeitpunkt der Vernetzung und die Spitzentemperatur, bei der die Vernetzung ihre maximale Umsetzung zeigt. Beim Abkühlen sinkt der gemessene Druck, bis er bei 75 °C den Nullpunkt erreicht. Dies lässt sich durch die Vernetzungsschrumpfung erklären, durch die die Flüssigsilikonkautschuk-Probe nicht mehr mit dem Spritzgießdrucksensor 152 in Berührung kommt. Die Messungen ergaben, dass die vernetzte Probe bei Raumtemperatur eine Dicke von 2,92 mm hat. Unter Berücksichtigung der Prüfkammerhöhe von 3,01 mm entspricht dies einer Schrumpfung von 3,0 %.

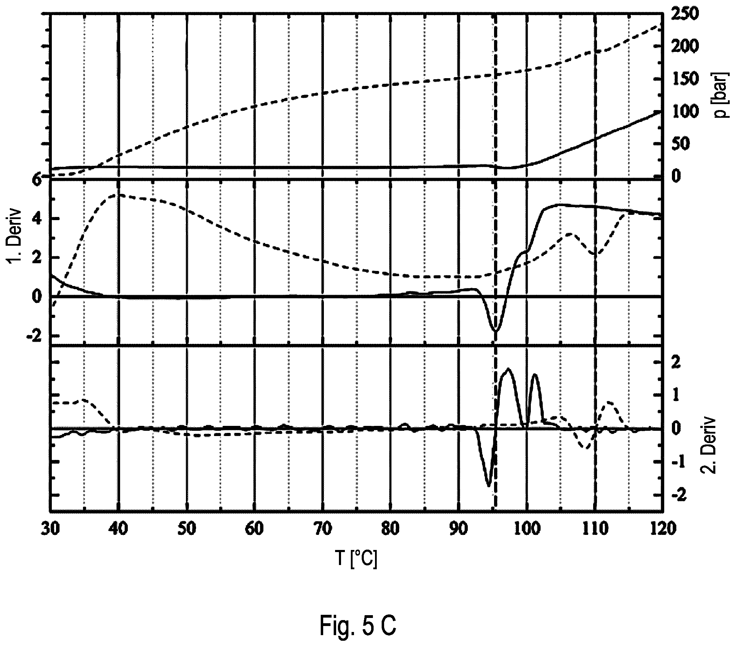

Figur 5C zeigt eine geglättete Druckkurve (oben) mit erster Ableitung (Mitte) und zweiter Ableitung (unten) für Silopren 2050 (jeweils gestrichelte Linie) und Silastic MS-1002 (jeweils durchgezogene Linie). Die zweite Ableitung zeigt ein charakteristisches Profil bei 110,1 °C und bei 95,3 °C.

Da die Vernetzung aus verfahrenstechnischer Sicht grundsätzlich von besonderem Interesse ist, wird die Heizkurve im Folgenden näher betrachtet. Um den Vernetzungsbereich deutlich zu machen, ist in Figur 5C zweimal der Druckverlauf über der Temperatur für Silopren 2050 (jeweils gestrichelte Linie) und als Validierung ein anderer Flüssigsilikonkautschuk-Typ, Silastic MS-1002 (jeweils durchgezogene Linie), abgeleitet. Was bei Silopren nur als Unstetigkeit der Steigung in der Druckkurve bei etwa 110 °C erkennbar ist, ist bei der zweiten Ableitung deutlich zu sehen. Typisch ist hier der Kurvenverlauf: große negative Änderung der Steigung, Nullpunkt und große positive Änderung der Steigung. Dieser Kurvenverlauf spiegelt grundsätzlich die Materialveränderungen während der Vernetzung wider.

Die Auswertung der Ableitung von Silopren 2050 zeigt einen Nullpunkt der zweiten Ableitung bei 110,1 °C. Verglichen mit den charakteristischen Temperaturen der DSC-Messung ist zu erkennen, dass für Silopren 2050 eine Korrelation zwischen dem Vernetzungsende der DSC-Messung bei 112 °C und dem Nullpunkt der zweiten Ableitung der Druckkurve bei 110,1 °C besteht. Das weitere Flüssigsilikonkautschuk-Material, eine optische Flüssigsilikonkautschuk-Formulierung (Silastic MS-1002 von Dow), wird ebenfalls untersucht. Die DSC-Messung zeigt den maximalen Umsatz (Peak) bei einer Temperatur von 95,3 °C. Bei der Messung des niedrigviskosen Materials in der Prüfkammer wurde mit der Methode der zweifachen Ableitung ein charakteristisches Profil für die Vernetzung bei 95,4 °C gefunden. Im Gegensatz zu Silopren 2050 fällt hier der Nullpunkt mit dem Maximum der Vernetzungsrate (Peak) bei der DSC-Messung zusammen.

Der Verlauf der Kurve vor dem Auftreten des Vernetzungspeaks ist bei den beiden untersuchten Materialien sehr unterschiedlich. Es wird vermutet, dass dies auf die unterschiedlichen Viskositäten und die damit verbundene Befüllung des Messgerätes zurückzuführen ist. Während sich das sehr niedrigviskose Silastic MS-1002 wie Wasser in das Messgerät einfüllen lässt und aufgrund der Schwerkraft flach ausläuft und das **Messgerät** vollständig ausfüllt, lässt sich das sehr hochviskose Silopren 2050 im Vergleich dazu nicht so leicht einfüllen. Beim Einfüllen stellt sich das Material mittig auf und wird dann beim Aufsetzen des Deckels flach gedrückt. Aber auch dann ist die Masse relativ formstabil und füllt das Messgerät nicht sofort vollständig aus. Die freien Bereiche am Rand werden erst durch eine Kombination aus Temperaturerhöhung und damit abnehmender Viskosität sowie Wärmeausdehnung und damit Verdrängung zum Rand hin gefüllt, was sich im Signal des Drucksensors bemerkbar macht. Zudem ist die thermische Ausdehnung abhängig von der Materialrezeptur. So führt ein hoher Füllstoffgehalt zu einer vergleichsweise geringen Schrumpfung, da die thermische Ausdehnung des Füllstoffs kleiner ist als die der Polymermatrix. Optische Silikone beispielsweise haben einen hohen Füllstoffgehalt, was wiederum, wie in Figur 5C zu sehen ist, zu einer geringeren Wärmeausdehnung und damit zu einem geringeren Druck in der Kavität führt.

Dennoch kann damit grundsätzlich gezeigt werden, dass die Auswertemethode der zweifachen Ableitung des Drucksignals unabhängig vom Material zur Darstellung der Vernetzung im Drucksignal verwendet werden kann. Weiterhin kann gezeigt werden, dass der Nullpunkt in der zweiten Ableitung je nach Flüssigsilikonkautschuk-Rezeptur sowohl mit dem Ende des Vernetzungsprozesses als auch mit dem maximalen Vernetzungsumsatz zusammenfällt.

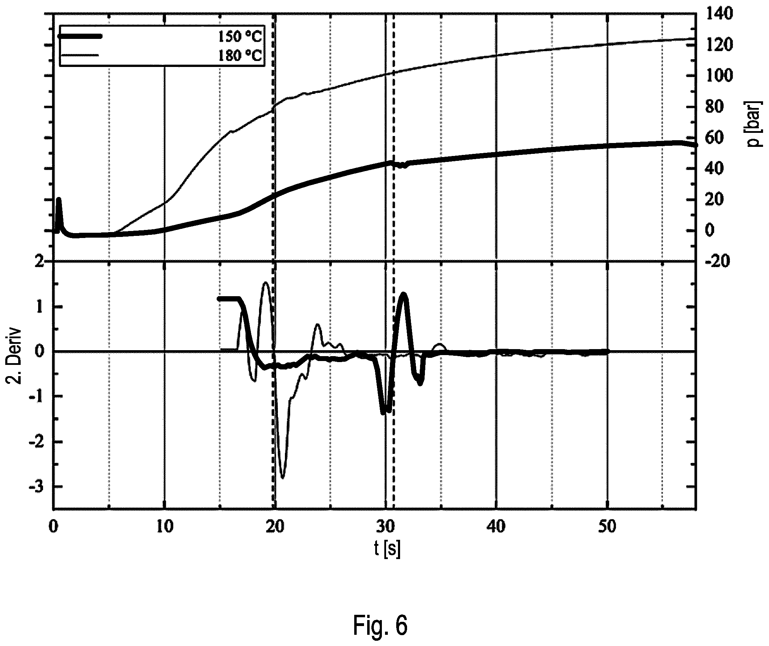

Figur 6 zeigt geglättete Druckkurven von Silopren 2050 im Spritzgießwerkzeug bei 150 °C (fette Linie) und 180 °C Werkzeugtemperatur. Für die Erstellung von beiden Druckkkurven wurde jeweils eine Einspritzgeschwindigkeit von 50 cm s⁻¹ verwendet.

Um die Interpretation des Drucksignals für die Flüssigsilikonkautschuk-verarbeitende Industrie nutzbar zu machen, wurde die Messmethodik mit ihrer Kennlinie auf den Werkzeuginnendruck von Spritzgießwerkzeugen übertragen. Zu diesem Zweck wurde der Werkzeuginnendruck während der Produktion von Flüssigsilikonkautschuk-Bauteilen gemessen. Da es sich auch hier um ein geschlossenes System wie die Prüfkammer handelt, war die Vernetzungsreaktion auch im Druckverlauf messbar.

Viele Werkzeuge in der industriellen Praxis sind nicht mit Temperatursensoren ausgestattet. Aus diesem Grund sind grundsätzlich Druckverläufe über die Zykluszeit verfügbar. Eine Auswertung der zweiten Ableitung zeigt zwei unterschiedliche Kennlinien für die beiden Werkzeugtemperaturen: Bei einer Werkzeugtemperatur von 150 °C wird der Nullpunkt der zweiten Ableitung nach 30,8 s gefunden, während sich bei einer Werkzeugtemperatur von 180 °C ein Nullpunkt nach 19,8 s ergibt. Zur Validierung der Ergebnisse wurden die Vernetzungsverläufe und Umsetzungen für beide Werkzeugtemperaturen mit einer Well-Fitting-Simulationsmethode simuliert. Hinsichtlich der der Well-Fitting-Simulationsmethode wird auf die Veröffentlichung D. F. Weißer, D. Walz, J. Schmid, D. Mayer, M. H. Deckert, Jnl Adv Manuf & Process 2020 verwiesen. Demnach tritt die vollständige Vernetzung bei einer Werkzeugtemperatur von 150 °C nach 31,2 s und bei einer Werkzeugtemperatur von 180 °C nach 19,0 s ein. Damit weicht das in der Druckkurve gemessene Vernetzungsende bei 150 °C Werkzeugtemperatur um 0,4 s (1,3 %) und die Vernetzungszeit bei 180 °C Werkzeugtemperatur um -0,8 s (-4,0 %) gegenüber der Simulation ab. In der Simulation wird die Einspritzzeit von 0,6 s bis zur vollständigen Füllung des Werkzeugs berücksichtigt.

Aus den Versuchsdaten ist ersichtlich, dass die Auswertung der Druckverläufe während des Spritzgießprozesses auf den Vernetzungsprozess hinweist. Außerdem stimmen die ermittelten Temperaturen für die abgeschlossene Vernetzung bis auf kleine Messunsicherheiten mit den Simulationswerten überein. Die Messwerte des Druckverlaufs weisen trotz Glättung eine hohe Übereinstimmung mit den Simulationswerten auf.

### Liste der Bezugszeichen

- 110: Vorrichtung
- 112: Fertigteil
- 114: Werkzeug
- 116: Kavität
- 118: Formplatte
- 120: düsenseitige Formplatte
- 122: schließseitige Formplatte
- 123: Öffnung
- 124: Einspritzeinrichtung
- 126: Fördereinheit
- 128: Extruder
- 130: Komponente
- 132: Mischvorrichtung
- 134: statischer Mischer
- 136: Dosiervorrichtung
- 138: Pfeil
- 140: Pfeil
- 142: Kasten
- 144: Prüfkammer
- 146: Bauteil
- 148: Prüfvorrichtung
- 150: Unterteil
- 152: Spritzgießdrucksensor
- 154: Oberteil
- 156: Temperatursensor
- 158: Probenraum
- 160: Werkzeuginnendrucksensor
- 162: Anguss

## Patentansprüche

1. Verfahren zur Prozessüberwachung während einer Herstellung eines Fertigteils (112) aus einem heißvernetzenden Werkstoff in einem Urformverfahren, wobei das Verfahren die folgenden Schritte umfasst:
a) Bereitstellen mindestens eines für das Urformverfahren eingerichteten Werkzeugs (114), wobei das Werkzeug (114) mindestens eine Kavität (116) zur Aufnahme mindestens eines Ausgangsstoffs für den heißvernetzenden Werkstoff aufweist, und wobei in das Werkzeug (114) ferner eine Vorrichtung zur Bestimmung eines Werkzeuginnendrucks integriert wird;
b) Erhitzen des Werkzeugs (114);
c) Einbringen des mindestens einen Ausgangsstoffs für den heißvernetzenden Werkstoff unter Druck in die Kavität (116), derart, dass das Fertigteil (112) hergestellt wird;
d) Erfassen eines in Schritt c) auftretenden zeitlichen Verlaufs des Werkzeuginnendrucks;
e) Mindestens einmaliges oder mindestens zweimaliges Differenzieren des zeitlichen Verlaufs des Werkzeuginnendrucks zur Bestimmung mindestens einer Ableitung ausgewählt aus der Gruppe bestehend aus: der Ableitung ersten Grades; der Ableitung zweiten Grades; und
f) Charakterisierung eines Verlaufs einer chemischen Vernetzungsreaktion mittels der mindestens einen Ableitung ausgewählt aus der Gruppe bestehend aus: der Ableitung ersten Grades; der Ableitung zweiten Grades.

2. Verfahren nach dem vorhergehenden Anspruch, wobei der heißvernetzende Werkstoff ausgewählt wird aus der Gruppe bestehend aus: einem Flüssigsilikonkautschuk; Festsilikonkautschuk; einem Epoxidharz; einem Polyurethan; einem Polyurethanschaum; einem Duroplast, insbesondere einem rieselfähigen Duroplast.

3. Verfahren nach einem der vorhergehenden Ansprüche, wobei der heißvernetzende Werkstoff Flüssigsilikonkautschuk ist.

4. Verfahren nach dem vorhergehenden Anspruch, wobei der Flüssigsilikonkautschuk ausgewählt wird aus der Gruppe bestehend aus: einem selbstschmierenden Flüssigsilikonkautschuk; einem selbsthaftenden Flüssigsilikonkautschuk; einem optischen Flüssigsilikonkautschuk, einem medizinischen Flüssigsilikonkautschuk, einem isolierenden Flüssigsilikonkautschuk.

5. Verfahren nach einem der vorhergehenden Ansprüche, wobei der heißvernetzende Werkstoff eine Zykluszeit von weniger als 60 s aufweist.

6. Verfahren nach einem der vorhergehenden Ansprüche, wobei in Schritt f) der Verlauf der chemischen Vernetzungsreaktion durch eine Auswertung der mindestens einen Ableitung ausgewählt aus der Gruppe bestehend aus: der Ableitung ersten Grades, der Ableitung zweiten Grades, während mindestens einer Phase des Verlaufs des Werkzeuginnendrucks ausgewählt aus der Gruppe bestehend aus: einer Aufheizphase, einer Vernetzungsphase, charakterisiert wird.

7. Verfahren nach einem der vorhergehenden Ansprüche, wobei mittels der Vorrichtung zur Bestimmung des Werkzeuginnendrucks eine direkte und/oder eine indirekte Bestimmung des Werkzeuginnendrucks erfolgt.

8. Verfahren nach einem der vorhergehenden Ansprüche, wobei in Schritt f) die Charakterisierung des Verlaufs der chemischen Vernetzungsreaktion durch Ermitteln mindestens einer der folgenden spezifischen Größen bestimmt wird:
• einem Nulldurchgang der Ableitung zweiten Grades;
• einem Verlauf der Ableitung zweiten Grades;
• einem Extremwert der Ableitung zweiten Grades.

9. Verfahren nach einem der vorhergehenden Ansprüche, wobei mittels Schritt f) ein Abschließen der chemischen Vernetzungsreaktion bestimmt wird.

10. Verfahren nach dem vorhergehenden Anspruch, wobei, falls mittels Schritt f) das Abschließen der chemischen Vernetzungsreaktion bestimmt wird, der Schritt c) beendet wird.

11. Verfahren nach einem der vorhergehenden Ansprüche, wobei durch Schritt f) eine Zykluszeit der Herstellung des Fertigteils (112) in dem Urformverfahren optimiert wird.

12. Vorrichtung (110) zur Prozessüberwachung während einer Herstellung eines Fertigteils (112) aus einem heißvernetzenden Werkstoff in einem Urformverfahren, wobei die Vorrichtung (110) mindestens ein für eine Ausführung des Urformverfahrens eingerichtetes Werkzeug (114) umfasst, wobei das Werkzeug (114) mindestens eine Kavität (116) zur Aufnahme mindestens eines Ausgangsstoffs für den heißvernetzenden Werkstoff aufweist, und wobei das Werkzeug (114) ferner über eine Vorrichtung zur Bestimmung eines Werkzeuginnendrucks verfügt, wobei die Vorrichtung (110) weiterhin mindestens eine Steuerung aufweist, wobei die Steuerung eingerichtet ist, um die Schritte b) bis f) nach einem der vorangegangenen Verfahrensansprüche durchzuführen.

## Claims

1. Method for process monitoring during production of a finished part (112) from a hot-crosslinking material in a primary forming process, the method comprising the following steps:
a) providing at least one tool (114) which is set up for the primary forming process, the tool (114) having at least one cavity (116) for receiving at least one starting substance for the hot-crosslinking material, and further an apparatus for determining a tool internal pressure being integrated in the tool (114);
b) heating the tool (114);
c) introducing the at least one starting substance for the hot-crosslinking material under pressure into the cavity (116), such that the finished part (112) is produced;
d) recording a variation over time of the tool internal pressure that arises in step c);
e) differentiating, at least once or at least twice, the variation of the tool internal pressure over time to determine at least one derivative selected from the following group: the first order derivative; the second order derivative; and
f) characterizing a profile of a chemical crosslinking reaction by means of the at least one derivative selected from the following group: the first-order derivative; the second-order derivative.

2. Method according to the preceding claim, wherein the hot-crosslinking material is selected from the following group: a liquid silicone rubber; solid silicone rubber; an epoxy resin; a polyurethane; a polyurethane foam; a thermoset, in particular a free-flowing thermoset.

3. Method according to either of the preceding claims, wherein the hot-crosslinking material is liquid silicone rubber.

4. Method according to the preceding claim, wherein the liquid silicone rubber is selected from the following group: a self-lubricating liquid silicone rubber; a self-adhesive liquid silicone rubber; an optical liquid silicone rubber; a medical liquid silicone rubber; an insulating liquid silicone rubber.

5. Method according to one of the preceding claims, wherein the hot-crosslinking material has a cycle time of less than 60 s.

6. Method according to one of the preceding claims, wherein, in step f), the profile of the chemical crosslinking reaction is **characterized by** an evaluation of the at least one derivative selected from the following group: the first-order derivative, the second-order derivative, during at least one phase of the tool internal pressure profile selected from the following group: a heating phase, a crosslinking phase.

7. Method according to one of the preceding claims, wherein the apparatus for determining the tool internal pressure is used to directly and/or indirectly determine the tool internal pressure.

8. Method according to one of the preceding claims, wherein, in step f), the characterization of the profile of the chemical crosslinking reaction is determined by ascertaining at least one of the following specific variables:
• a zero crossing of the second-order derivative;
• a profile of the second-order derivative;
• an extreme value of the second-order derivative.

9. Method according to one of the preceding claims, wherein step f) is used to determine a conclusion of the chemical crosslinking reaction.

10. Method according to the preceding claim, wherein, if step f) is used to determine the conclusion of the chemical crosslinking reaction, step c) is ended.

11. Method according to one of the preceding claims, wherein, by virtue of step f), a cycle time of the production of the finished part (112) in the primary forming process is optimized.

12. Apparatus (110) for process monitoring during production of a finished part (112) from a hot-crosslinking material in a primary forming process, wherein the apparatus (110) comprises at least one tool (114) which is set up for implementing the primary forming process, the tool (114) having at least one cavity (116) for receiving at least one starting substance for the hot-crosslinking material, and the tool (114) further having an apparatus for determining a tool internal pressure, the apparatus (110) also having at least one controller, the controller being set up to carry out steps b) to f) according to one of the preceding method claims.

## Revendications

1. Procédé de surveillance de processus pendant une fabrication d'une pièce finie (112) à partir d'un matériau réticulable à chaud dans un procédé de mise en forme primaire, le procédé comprenant les étapes suivantes :
a) la fourniture d'au moins un outil (114) adapté pour le procédé de mise en forme primaire, l'outil (114) présentant au moins une cavité (116) destinée à recevoir au moins une matière de départ pour le matériau réticulable à chaud, et un dispositif destiné à déterminer une pression interne de l'outil étant en outre intégré dans l'outil (114) ;
b) le chauffage de l'outil (114) ;
c) l'introduction sous pression de l'au moins une matière de départ pour le matériau réticulable à chaud dans la cavité (116), de telle sorte que la pièce finie (112) soit fabriquée ;
d) l'acquisition d'une évolution temporelle de la pression interne de l'outil se produisant à l'étape c) ;
e) la différenciation au moins une fois ou au moins deux fois de l'évolution temporelle de la pression interne de l'outil afin de déterminer au moins une dérivée sélectionnée dans le groupe constitué par : la dérivée du premier degré ; la dérivée du deuxième degré ; et
f) la caractérisation d'une évolution d'une réaction chimique de réticulation au moyen de l'au moins une dérivée sélectionnée dans le groupe constitué par ; la dérivée du premier degré ; la dérivée du deuxième degré.

2. Procédé selon la revendication précédente, le matériau réticulable à chaud étant sélectionné dans le groupe constitué par : un caoutchouc de silicone liquide ; un caoutchouc de silicone solide ; une résine époxy ; un polyuréthane ; une mousse de polyuréthane ; un thermodurcissable, notamment un thermodurcissable apte à l'écoulement.

3. Procédé selon l'une quelconque des revendications précédentes, le matériau réticulable à chaud étant un caoutchouc de silicone liquide.

4. Procédé selon la revendication précédente, le caoutchouc de silicone liquide étant sélectionné dans le groupe constitué par : un caoutchouc de silicone liquide autolubrifiant ; un caoutchouc de silicone liquide auto-adhérent ; un caoutchouc de silicone liquide optique ; un caoutchouc de silicone liquide médical ; un caoutchouc de silicone liquide isolant.

5. Procédé selon l'une quelconque des revendications précédentes, le matériau réticulable à chaud présentant un temps de cycle inférieur à 60 s.

6. Procédé selon l'une quelconque des revendications précédentes, dans lequel, à l'étape f), l'évolution de la réaction chimique de réticulation est **caractérisée par** une évaluation de l'au moins une dérivée sélectionnée dans le groupe constitué par : la dérivée du premier degré, la dérivée du deuxième degré, pendant au moins une phase de l'évolution de la pression interne de l'outil sélectionnée dans le groupe constitué par : une phase de chauffage, une phase de réticulation.

7. Procédé selon l'une quelconque des revendications précédentes, une détermination directe et/ou indirecte de la pression interne de l'outil étant effectuée au moyen du dispositif destiné à déterminer la pression interne de l'outil.

8. Procédé selon l'une quelconque des revendications précédentes, dans lequel, à l'étape f), la caractérisation de l'évolution de la réaction chimique de réticulation est déterminée par la détermination d'au moins une des grandeurs spécifiques suivantes :
• un passage par zéro de la dérivée du deuxième degré ;
• une évolution de la dérivée du deuxième degré ;
• une valeur extrême de la dérivée du deuxième degré.

9. Procédé selon l'une quelconque des revendications précédentes, un achèvement de la réaction chimique de réticulation étant déterminé au moyen de l'étape f).

10. Procédé selon la revendication précédente, dans lequel, si l'achèvement de la réaction chimique de réticulation est déterminé au moyen de l'étape f), l'étape c) est terminée.

11. Procédé selon l'une quelconque des revendications précédentes, une durée de cycle de la fabrication de la pièce finie (112) dans le procédé de mise en forme primaire étant optimisée par l'étape f).

12. Dispositif (110) de surveillance de processus pendant une fabrication d'une pièce finie (112) à partir d'un matériau réticulable à chaud dans un procédé de mise en forme primaire, le dispositif (110) comprenant au moins un outil (114) adapté pour une exécution du procédé de mise en forme primaire, l'outil (114) présentant au moins une cavité (116) destinée à recevoir au moins une matière de départ pour le matériau réticulable à chaud, et l'outil (114) disposant en outre d'un dispositif destiné à déterminer une pression interne de l'outil, le dispositif (110) présentant en outre au moins une commande, la commande étant adaptée pour effectuer les étapes b) à f) selon l'une quelconque des revendications de procédé précédentes.
